# EUROPEAN PATENT APPLICATION

(11) **EP 4 611 386 A2**
(43) Date of publication of application: **03.09.2025**
(21) Application number: 24160402.4
(22) Date of filing: 29.02.2024
(51) Int. Cl.: H04Q 1/06

(54) **CABLE ARRANGEMENT MECHANISM, CONNECTING PLATE FOR CABLE DISTRIBUTION AND DISTRIBUTION FRAME**

(71) Applicant: Capatronics Electronics (Kunshan) Co., Ltd., Kunshan, Jiangsu 215000 (CN)
(72) Inventor: Wang, Chuanbao, Kunshan (CN); Wang, Zhiwei, Kunshan (CN)
(74) Representative: Kurig, Thomas

(57) **Abstract**

The present invention discloses a cable arranging mechanism, including: a first plate body and a second plate body, in a case that the second plate body and the first plate body are clamped with each other, an opening for a joint of a cable to pass through being closed and at least one through hole for the cable to pass through being formed. The present invention further discloses a cable arrangement mechanism, including an extension plate connected with at least one of the first plate body and the second plate bodies and an auxiliary plate mutually clamped with the extension plate, in a case that the extension plate and the auxiliary plate are clamped with each other, a first clamping notch and a second clamping notch forming a limiting hole for the cable to pass through. The present invention can solve the problem that after cables between a cabinet and a switch are arranged tidily, due to the characteristics of the cables themselves, U-shaped ends of the cables may be twisted and misaligned, so that the cable arranging effect is not ideal, each cable cannot be completely separated and the engineering construction quality is influenced.

## Description

This application claims priority to invention patent application No.202211729428.0 filed by the applicant "KAIPU ELECTRONICS KUNSHAN CO., LTD." on December 30, 2022 and titled "CABLE ARRANGING MECHANISM, CONNECTING PLATE FOR DISTRIBUTION AND DISTRIBUTION FRAME".

### Technical field

The present invention relates to the field of network wiring equipment, in particular to a cable arranging mechanism, a cable arrangement mechanism, a connecting plate for distribution, and a distribution frame.

### Background

Internet is essential to people in production and daily life today. In order to facilitate the unified management of network communication equipment and the connection with optical cables, it is mostly necessary to use a cabinet. Multiple optical cables are connected with the switch separately in the cabinet. In this process, one end of each adapter cable (or jumper) needs to be connected with the switch, and the other end needs to be connected with the network interface of the distribution mechanism.

Due to the large number of network cables inside the cabinet, there are usually multiple specifications of distribution frames such as 12 holes and 24 holes. Therefore, a distribution frame often needs to connect 12 or 24 jumpers. Therefore, in order to facilitate cable management, it is currently necessary to separately provide a cable arranging frame to work with the distribution frame to facilitate cable arrangement.

However, existing cable arranging frames often occupy a larger volume, typically require a height of 1U, and require a larger space in both width and length directions. At present, although the cable arranging structure disclosed in Chinese invention patent CN115951461A can also be used for arranging cables, as illustrated in FIG. 8 of this patent, in a case that the cables are bent into U-shaped structures, the cables cannot be arranged as illustrated in the figure due to their own characteristics, and U-shaped ends of the cables will be twisted and misaligned, so that the cable arranging effect is not ideal, the engineering construction quality is influenced, and a lot of time is required to locate the cables during troubleshooting. Moreover, the cable arranging frame will inevitably increase the space occupied by the cable arranging mechanism. In addition, the positions of the cables cannot be completely fixed, so each cable is prone to bouncing.

### Summary

The present invention aims at solving the problem that after cables between a cabinet and a switch are arranged tidily, due to the characteristics of the cables themselves, U-shaped ends of the cables may be twisted and misaligned, so that the cable arranging effect is not ideal and the engineering construction quality is influenced.

According to a first aspect, the present invention provides a cable arranging mechanism, including: a first plate body, the first plate body being provided with an opening for a joint of a cable to pass through; and a second plate body, at least partial area of the second plate body being capable of being clamped with the first plate body, in a case that the second plate body and the first plate body are clamped with each other, the opening for the joint of the cable to pass through being closed and at least one through hole for the cable to pass through being formed, and in a case that the second plate body and the first plate body are not clamped with each other, the opening for the joint of the cable to pass through being in an open state.

The space occupied the cable arranging mechanism of the present invention is very small. Therefore, in a case that the cable arranging mechanism of the present invention is provided on other mechanisms (such as distribution frames), the space originally occupied by the distribution frame will not be increased, and there is no need to provide a separate cable arranging frame, which not only reduces the use and installation costs of the cable arranging frame, but also effectively reduces the volume occupied by the cable arranging mechanism, reduces the cable arranging cost, and increases the utilization rate of the limited space in the cabinet.

In an exemplary technical solution of the cable arranging mechanism, the second plate body is provided with at least one first clamping head capable of being clamped with the first plate body, and the first clamping head is provided with a second clamping groove capable of being clamped with the first plate body. Therefore, through the fitting between the first clamping head and the second clamping groove, it is convenient to clamp the second plate body with the first plate body.

In an exemplary technical solution of the cable arranging mechanism, one side of the first clamping head away from the second plate body is provided with an adjusting groove, and the first clamping head is capable of moving in the adjusting groove towards a direction of getting close to or away from the first plate body.

In an exemplary technical solution of the cable arranging mechanism, at least one of the first plate body and the second plate body is further provided with a clamping part for connecting with a third mechanism.

In an exemplary technical solution of the cable arranging mechanism, the clamping part includes:
at least one second clamping protrusion, the third mechanism being provided with a third clamping groove fit with the second clamping protrusion; and
at least one clamping buckle, the clamping buckle being used for clamping with a partial area of the third mechanism. Therefore, in a case that the cable arranging mechanism needs to be connected with the third mechanism, the second clamping protrusion is clamped with the third clamping groove. By clamping the clamping buckle with the third mechanism, the cable arranging mechanism can be quickly connected with the third mechanism.

In an exemplary technical solution of the cable arranging mechanism, the cable arranging mechanism further includes an extension plate connected with at least one of the first plate body and the second plate body and an auxiliary plate clamped with the extension plate, the extension plate and the auxiliary plate are respectively provided with at least one group of first clamping notch and second clamping notch which correspond to each other, so that in a case that the extension plate and the auxiliary plate are clamped with each other, the first clamping notch and the second clamping notch form a limiting hole for the cable to pass through; or in a case that the extension plate and the auxiliary plate are not clamped with each other, the first clamping notch and the second clamping notch are opened.

In the present invention, the cables are arranged through the through holes in the first body plate and the second plate body, and in combination with the limiting holes in the extension plate and the auxiliary plate, the cables in U-shaped structures are effectively fixed, thus achieving tidy separation of each cable.

In an exemplary technical solution of the cable arranging mechanism, at least one adjusting piece is provided in the limiting hole, an adjusting gap is formed between the adjusting piece and an inner sidewall of the limiting hole, and the adjusting piece is located on one side of the limiting hole close to the extension plate or the auxiliary plate. The adjusting piece may be an arc-shaped elastic piece, so that in a case that the cable is located in the limiting hole, the adjusting piece presses the outer surface of the cable against the inner wall of the limiting hole. Therefore, the cable can be confined within the limiting hole under the action of the limiting hole. When the position of the cable needs to be adjusted, space is provided for cable movement to facilitate cable position adjustment.

In an exemplary technical solution of the cable arranging mechanism, the extension plate and the first plate body are integrally formed; or the extension plate and the first plate body are assembled from a split type.

In an exemplary technical solution of the cable arranging mechanism, the extension plate extends towards a direction of getting away from the first plate body on one side of the first plate body to form an extension area. This extension area allows for a certain distance between the portion of the cable that is fixed by the limiting hole and the cable interface, so as to facilitate the direction changing of the cable and the fixation of the cable.

In an exemplary technical solution of the cable arranging mechanism, the cable arranging mechanism further includes a labeling area, the labeling area is used for labeling the hole number of the through hole or the limiting hole, and the labeling area is provided on one side surface of the auxiliary plate away from the extension plate. Providing the labeling area on the auxiliary plate not only facilitates the identification of the hole number, but also fully utilizes the structural space of the auxiliary plate, thus making the overall structure of the cable arranging mechanism compact.

According to a second aspect, the present invention further provides a cable arrangement mechanism, including an extension plate and an auxiliary plate capable of being clamped with the extension plate, the extension plate and the auxiliary plate being respectively provided with at least one group of first clamping notch and second clamping notch which correspond to each other, so that in a case that the extension plate and the auxiliary plate are clamped with each other, the first clamping notch and the second clamping notch form a limiting hole for a cable to pass through; or in a case that the extension plate and the auxiliary plate are not clamped with each other, the first clamping notch and the second clamping notch are opened.

In an exemplary technical solution of the cable arrangement mechanism, at least one adjusting piece is provided in the limiting hole, an adjusting gap is formed between the adjusting piece and an inner sidewall of the limiting hole, and the adjusting piece is located on one side of the limiting hole close to the extension plate or the auxiliary plate.

In an exemplary technical solution of the cable arrangement mechanism, the cable arrangement mechanism further includes a labeling area, the labeling area is used for labeling the hole number of the limiting hole, and the labeling area is provided on one side surface of the auxiliary plate away from the extension plate.

According to a third aspect, the present invention further provides a connecting plate for distribution, including a main plate body, the cable arranging mechanism and the cable arrangement mechanism, the main plate body being provided with at least one network interface for a network cable to be inserted in, the height of the connecting plate being 1U-2U.

In an exemplary technical solution of the connecting plate for distribution, the height of the connecting plate is 1U, and the height occupied by the cable arranging mechanism does not exceed 0.5U.

According to a third aspect, the present invention further provides a distribution frame, including the connecting plate for distribution and a frame body connected with the connecting plate. By using the distribution frame of the present invention, the cables are arranged through the through holes in the first plate body and the second plate body, and in combination with the limiting holes in the extension plate and the auxiliary plate to effectively fix the cables in U-shaped structures, the tidy separation of each cable can be achieved. In addition, the cables are arranged tidily and do not bounce easily. At the same time, the distribution frame of the present invention does not require separately providing a cable arranging frame, thus greatly reducing space occupied, also reducing the use cost of the cable arranging frame, and increasing the utilization rate of the limited space in the cabinet.

Further, the distribution frame further includes a cover body detachably connected with the frame body, and at least part of the cable is capable of being accommodated in a chamber formed by the cover body and the frame body.

### Description of the Drawings

FIG. 1 illustrates a 3D structural schematic diagram when a first plate body and a second plate body are clamped according to embodiment 1 of the present invention.
FIG. 2 illustrates a 3D structural schematic diagram of a first plate body according to embodiment 1 of the present invention.
FIG. 3 illustrates a 3D structural schematic diagram of a second plate body according to embodiment 1 of the present invention.
FIG. 4a illustrates a schematic diagram of a position where a fourth clamping groove is provided according to embodiment 1 of the present invention.
FIG. 4b illustrates a schematic diagram of another position where a fourth clamping groove is provided according to embodiment 1 of the present invention.
FIG. 5a illustrates a 3D structural schematic diagram of a connecting plate for distribution according to embodiment 3 of the present invention.
FIG. 5b illustrates a schematic diagram of a use scenario of a connecting plate for distribution according to embodiment 3 of the present invention.
FIG. 5c illustrates a schematic diagram of another use scenario of a connecting plate for distribution according to embodiment 3 of the present invention.
FIG. 6 illustrates a schematic diagram I after an extension plate and an auxiliary plate are connected with a first plate body and a second plate body according to the present invention.
FIG. 7 illustrates a schematic diagram II after an extension plate and an auxiliary plate are connected with a first plate body and a second plate body according to the present invention.
FIG. 8 illustrates a schematic diagram III after an extension plate and an auxiliary plate are connected with a first plate body and a second plate body according to the present invention.
FIG. 9 illustrates a schematic diagram in a case that an auxiliary plate and an auxiliary plate are not clamped with each other and a first plate body and a second plate body are not clamped with each other.
FIG. 10 illustrates a structural schematic diagram I in a case that a cover body is not provided according to embodiment 4 of the present invention.
FIG. 11 illustrates a structural schematic diagram II in a case that a cover body is not provided according to embodiment 4 of the present invention.
FIG. 12 illustrates a partial schematic diagram in a case that a cover body is not provided according to embodiment 4 of the present invention.
FIG. 13 illustrates a schematic diagram after an auxiliary plate is opened in a case that a cover body is not provided according to embodiment 4 of the present invention.
FIG. 14 illustrates a structural schematic diagram II in a case that a cover body is provided according to embodiment 4 of the present invention.
FIG. 15 illustrates a structural schematic diagram II in a case that a cover body is provided according to embodiment 4 of the present invention.

### Description of reference signs:

11-first plate body; 111-opening; 112-arc-shaped groove I; 12-second plate body; 121-arc-shaped groove II;
123-adjusting groove; 13-through hole; 14-first clamping head; 141-second clamping groove; 142-poking piece; 143-blocking piece;
201-extension plate; 202-auxiliary plate; 203-first clamping notch; 204-second clamping notch; 205-limiting hole; 206-adjusting piece; 207-labeling area;
31-second clamping protrusion; 32-clamping buckle; 4-third clamping groove;
5-main plate body; 51-network interface; 52-elongation plate I; 521-clamping position; 53-elongation plate II; 54-bracket; 6-frame body; 61-cable supporting rack; 62-cable clamping seat; 63-tying buckle; 7-cover body;
81-network module; 82-PCB circuit board; 821-connector; 9-fourth clamping groove.

### Description of the Embodiments

The exemplary embodiments of the present invention will be described below with reference to the drawings. Those skilled in the art should understand that these embodiments are only intended to explain the technical principles of the present invention rather than limit the scope of protection of the present invention.

Terminology explanation: "1U" herein refers to the international standard height of distribution frame and cable arranging frame products, usually 44 millimeters.

### Embodiment 1

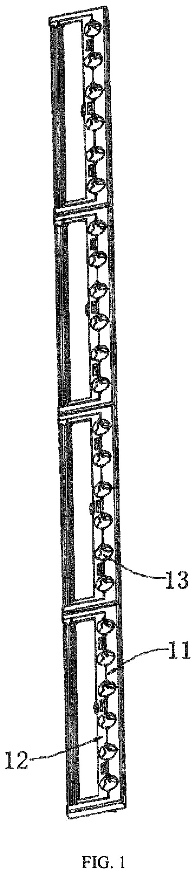

Referring to FIG. 1, this embodiment provides a cable arranging mechanism, which includes a first plate body 11 and a second plate body 12 which are clamped with each other.

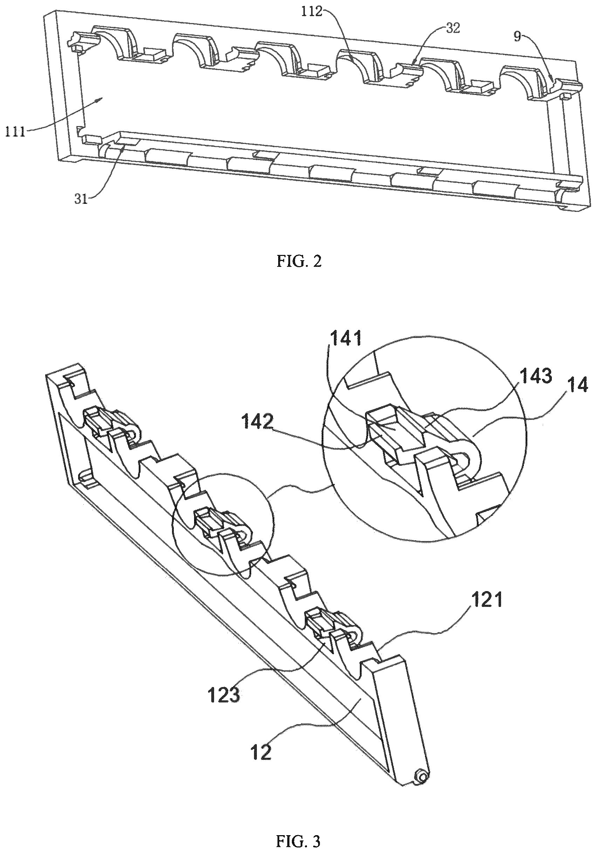

Referring to FIG. 2, the first plate body 11 is provided with an opening 111 for a joint of a cable to pass through, so that in a case that the second plate body 12 is separated from the first plate body 11, the cable and its joint can be conveniently passed through the opening 11 to facilitate cable arranging.

In a case that the second plate body 12 and the first plate body 11 are clamped with each other, at least one through hole 13 for the cable to pass through is formed.

Referring to FIG. 3, in some embodiments, one side of the second plate body 12 close to the first plate body 11 is provided with an arc-shaped groove II 121. One side of the first plate body 11 close to the second plate body 12 is provided with an arc-shaped groove I 112. Therefore, in a case that the second plate body 12 and the first plate body 11 are clamped, the arc-shaped groove I 112 and the arc-shaped groove II 121 exactly form the through hole 13, thus limiting the part of the cable in the through hole 13. In some embodiments, the inner diameter of the through hole 13 is less than the outer diameter of the joint of the cable, so in a case that the second plate body 12 and the first plate body 11 are clamped with each other, the joint of the cable will not fall off or retreat from the through hole 13.

In the cable arranging mechanism of the present invention, by providing the second plate body 12 that can be separated from and clamped with the first plate body 11, when threading is required, the second plate body 12 is separated from the first plate body 11, and the second plate body 12 is clamped with the first plate body 11 after threading, thus quickly achieving threading operation. The space occupied the cable arranging mechanism of the present invention is very small. Therefore, in a case that the cable arranging mechanism of the present invention is provided on other mechanisms (such as distribution frames), the space originally occupied by the distribution frame will not be increased, and there is no need to provide a separate cable arranging frame, which not only reduces the use and installation costs of the cable arranging frame, but also effectively reduces the volume occupied by the cable arranging mechanism, reduces the workpiece production cost, increases the utilization rate of the limited space in the cabinet, and improves the market share of the present invention.

In some embodiments, the first plate body 11 and the second plate body 12 are pivoted, that is, a first end of the second plate body 12 is rotatably installed on the first plate body 11, and a second end of the second plate body 12 is fastened onto the first plate body 11. By adopting such arrangement, the quick clamping of the first plate body 11 and the second plate body 12 can be achieved. It should be noted that the connection method of the first plate body 11 and the second plate body 12 is not limited.

In the cable arranging mechanism of the present invention, the second plate body 12 is provided with at least one first clamping head 14 capable of being clamped with the first plate body 11, and the first clamping head 14 is provided with a second clamping groove 141 capable of being clamped with the first plate body 11.

In the present invention, the first clamping head 14 is a movable clamping head. The first clamping head 14 includes a poking piece 142 and a blocking piece 143. The poking piece 142 and the blocking piece 143 form a second clamping groove 141. In a case that the second plate body 12 is clamped with the first plate body 11, the poking piece 142 and the blocking piece 143 are located on two sides of the first plate body 11, respectively. One side of the first clamping head 14 of the second plate body 12 away from the first plate body 11 is provided with an adjusting groove 123, and the first clamping head 14 can move in the adjusting groove 123 towards a direction of getting close to or away from the first plate body 11. Therefore, in a case that the second plate body 12 needs to be clamped with the first plate body 11, the first plate body 11 is clamped in the second clamping groove 141. In a case that the second plate body 12 needs to be separated from the first plate body 11, since the adjusting groove 123 provides adjusting space for the movement of the poking piece 142, at this time, pressing the poking piece 142 can separate the second plate body 12 from the first plate body 11, so that the opening 111 is in an open state, and the cable can be smoothly passed through the opening 111.

The first plate body 11 and/or the second plate body 12 is further provided with a clamping part for connecting with a third mechanism. The "third mechanism" referred to here refers to any other mechanism except the cable arranging mechanism. In some embodiments, it may be a distribution frame, a cable arranging frame, a network distribution cabinet, or the like.

Referring to FIG. 2, in some embodiments, the clamping part includes at least one second clamping protrusion 31 and at least one clamping buckle 32.

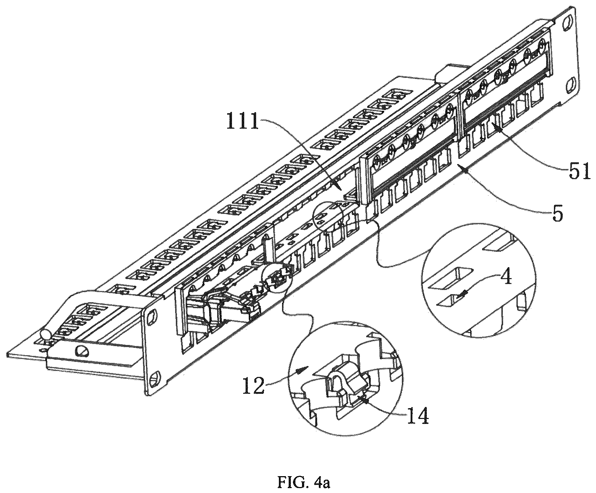

In some embodiments, the second clamping protrusion 31 is provided close to a lower edge of the first plate body 11, and the third mechanism is provided with a third clamping groove 4 fit with the second clamping protrusion 31 (refer to FIG. 4a which illustrates a schematic diagram of a second opening 111 from a left end in a case that the first plate body 11 and the second plate body 12 are removed). A clamping buckle 32 is used to be clamped with a partial area of the third mechanism. An outer end of the clamping buckle 32 is provided with a sloping surface. The height of the sloping surface gradually decreases along one side away from a main body of the cable arranging mechanism. Therefore, in a case that it is needed to clamp the cable arranging mechanism with the third mechanism, the cable arranging mechanism is pushed towards a direction of getting close to the third mechanism. Under the guidance of the sloping surface, the clamping buckle 32 can be quickly clamped with the third mechanism. In some embodiments, a fourth clamping groove 9 is formed between the clamping buckle 32 and a main plate body of the first plate body 11, so it can be clamped with the third mechanism through the fourth clamping groove 9. A bottom of the fourth clamping groove 9 may be flat or stepped, so that it can match a third mechanism in a wider range of specifications and sizes.

In other possible embodiments, the third clamping groove 4 may also be in a form in FIG. 4c, and correspondingly, any one of the first plate body 11 or the second plate body 12 is provided with a second clamping protrusion 31. The second clamping protrusion may be clamped into the third clamping groove 4, thus facilitating the first plate body 11 and/or the second plate body 12 to be clamped with the third clamping groove 4 in the third mechanism. At the same time, the first plate body 11 and/or the second plate body 12 is provided with a clamping buckle, and the third mechanism is provided with a corresponding structure fit with the clamping buckle, so that the stable clamping of the first plate body 11 and/or the second plate body 12 and the third mechanism can be achieved. In some embodiments, the third clamping groove 4 and the clamping buckle may be alternately provided.

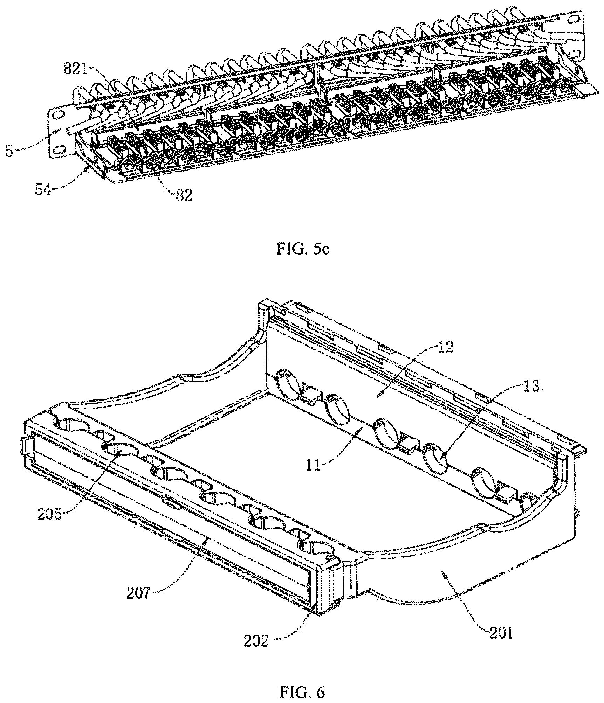

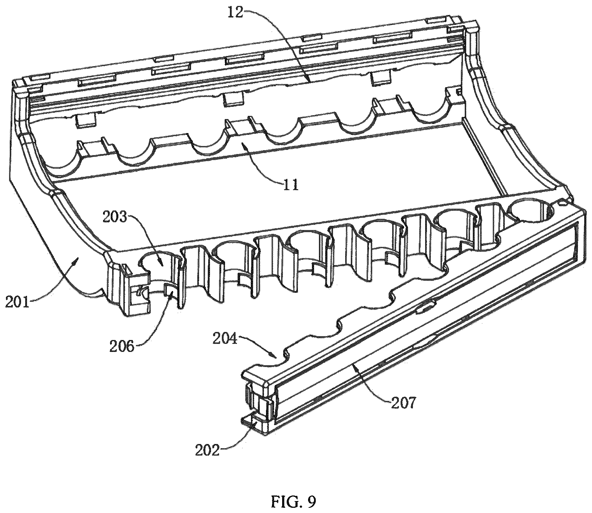

Referring to FIG. 6 to FIG. 9, the cable arranging mechanism of the present invention further includes an extension plate 201 installed on the first plate body 11 and an auxiliary plate 202 that is clamped with the extension plate 201. The extension plate 201 and the first plate body 11 may be integrally formed, or may be assembled from a split type through clamping, riveting, and bolting. The extension plate 201 and the first plate body 11 form a frame structure. The extension plate 201 is roughly in an uncapped square shape. The first plate body 11 is roughly in a straight line shape. The auxiliary plate 202 is clamped on one side of the extension plate 201 away from the first plate body 11. One side of the extension plate 201 away from the first plate body 11 and the auxiliary plate 202 are respectively provided with a first clamping notch 203 and a second clamping notch 204. In a case that the auxiliary plate 202 is clamped onto the extension plate 201, the first clamping notch 203 and the second clamping notch 204 form a limiting hole 205 for the cable to pass through. In some embodiments, a line where a central axis of the limiting hole 205 is located is perpendicular to a line where the through hole 13 is located. Taking FIG. 6 as an example, in case that the central axis of the through hole 13 is in a horizontal direction, then the central axis of the limiting hole 205 is in a direction perpendicular to the horizontal plane. In some embodiments, the line where the central axis of the limiting hole 205 is located is not perpendicular to the line where the through hole 13 is located (for example, they are in parallel or form a certain angle), as long as the cable can be fixed at the limiting hole 205 and the bending angle of the cable passing through each limiting hole 205 remains similar. Therefore, under the action of the limiting hole 205, the effect of tidily arranging the cables can be achieved.

In some embodiments, there is an extension area between the extension plate 201 and the first plate body 11. The extension area allows for a certain distance between the portion of the cable that is fixed by the limiting hole and the cable interface, so as to facilitate the direction changing of the cable and the fixation of the cable. Therefore, after the cable passes through the through hole 13 and the limiting hole 205, the cable is in a U-shaped structure. In the present invention, by arranging the cable through the through holes 13 in the first plate body 11 and the second plate body 12, in combination with the limiting holes 205 in the extension plate 201 and the auxiliary plate 202, the cable in the U-shaped structure can be effectively fixed and the tidy separation of each cable can be achieved. At least one limiting hole 205 is formed in the extension plate 201 and the auxiliary plate 202. The limiting holes 205 correspond to the through holes 13 formed in the first plate body 11 and the second plate body 12 one to one. In a case that the extension plate 201 and the auxiliary plate 202 are no longer clamped, the first clamping notch 203 and the second clamping notch 204 are in an open state, and at this time the cable located in the first clamping notch 203 can be adjusted.

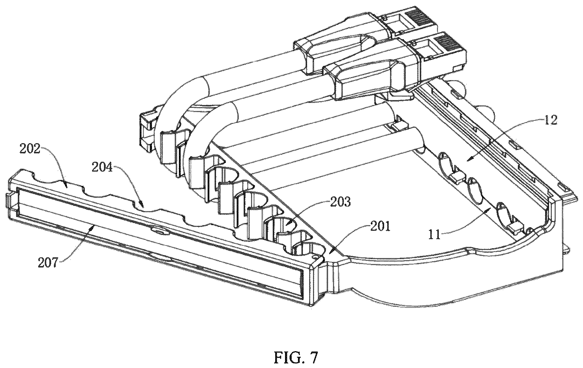

Referring to FIG. 7, in some embodiments, one end of the auxiliary plate 202 is rotatably installed at one end portion of the extension plate 201 away from the first plate body 11, and the other end of the auxiliary plate 202 is clamped on the extension plate 201. In a case that the first clamping notch 203 needs to be separated from the second clamping notch 204 to adjust and install the cable, opening one end of the auxiliary plate 202 clamped onto the extension plate 201 can improve the convenience of cable installation and adjustment, prevent the auxiliary plate 202 from being removed from the extension plate 201, and reduce the risk of losing the auxiliary plate 202. In addition, the auxiliary plate 202 and the extension plate 201 of the present invention occupy a small space and have a complete structure, thus reducing the manufacturing cost. In other possible embodiments, both ends of the auxiliary plate 202 are clamped onto the extension plate 201. The method of clamping the auxiliary plate 202 onto the extension plate 201 may be connection through clamping buckle and clamping groove. The specific clamping structure is not limited herein.

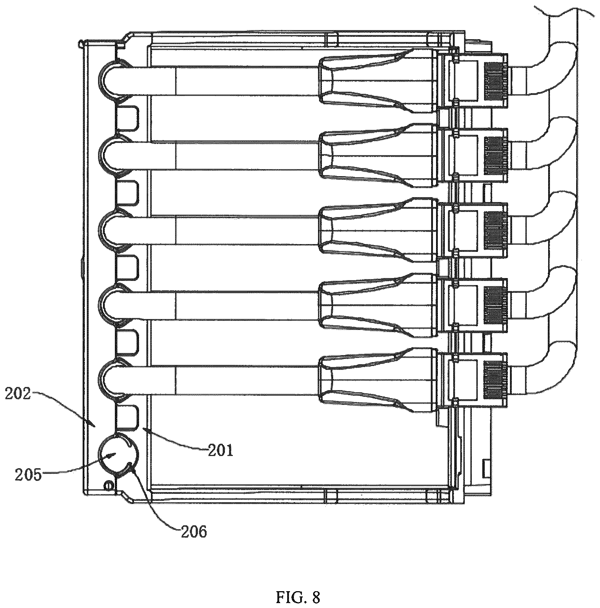

Referring to FIG. 8, in some embodiments, an adjusting piece 206 is formed in the limiting hole 205. An adjusting gap is formed between the adjusting piece 206 and an inner sidewall of the limiting hole 205. The cable can be confined within the limiting hole 205 under the action of the limiting hole 205. In a case that the position of the cable needs to be adjusted, since an adjusting gap is formed between the adjusting piece 206 and the inner sidewall of the limiting hole 205, the adjusting piece 206 is moved towards a direction of getting closed to the inner sidewall of the limiting hole 205, thus providing space for cable movement and facilitating cable position adjustment. In some embodiments, the number of the adjusting piece 206 is two, and only one end of each adjusting piece 206 is in contact with the inner sidewall of the limiting hole 205, so that when the cable comes into contact with the adjusting pieces 206, the adjusting pieces 206 can hold the cable against the inner sidewall of the limiting hole 205, thus further improving the fixing effect of the cable. Alternatively, since there is an adjusting gap between the adjusting piece 206 and the limiting hole 205, after the cable is fixed by the limiting hole 205, the cable length or position can still be finely adjusted, thus reducing the number of times of opening the auxiliary plate 202 to adjust the cable, and improving the use effect of the cable.

In some embodiments, the adjusting piece 206 is arc-shaped, making it easy to match the shape of the cable. The cross-section of the adjusting piece 206 may be semi-circular or arc-shaped.

In some embodiments, the adjusting piece 206 may also be an elastic piece.

In some embodiments, the adjusting piece 206 may be located in the first clamping notch 203 of the extension plate 201, or it may be located in the second clamping notch 204 of the auxiliary plate 202, or one adjusting piece 206 may be located in the first clamping notch 203 and the other adjusting piece 206 may be located in the second clamping notch 204, which is not specifically limited herein. In a case that the adjusting piece 206 is located in the first clamping notch 203, the adjusting piece 206 may be integrally formed with the extension plate 201. In a case that the adjusting piece 206 is located in the second clamping notch 204, the adjusting piece 206 may be integrally formed with the auxiliary plate 202.

In some embodiments, the length of the adjusting piece 206 in the limiting hole 205 along the axial direction of the limiting hole 205 (i.e., the depth of the limiting hole 205) is not limited. For example, it may be 1/2, 1/3, 1/4, 1/5 or the like of the depth of the limiting hole 205.

In some embodiments, the adjusting piece 206 is provided close to the opening position of the limiting hole 205 to facilitate the processing and forming of the adjusting piece 206.

Referring to FIG. 6 and FIG. 7, the cable arranging mechanism of the present invention further includes a labeling area 207. The labeling area 207 is used for labeling hole numbers of the through holes 13 and the limiting holes 205 that correspond to each other one to one.

In some embodiments, the labeling area 207 is provided on one side surface of the auxiliary plate 202 away from the extension plate 201. In some embodiments, the labeling area 207 includes a transparent cover body that can be turned over. The cover body can be clamped with the auxiliary plate 202. A gap for placing labeling paper is formed between the cover body and the auxiliary plate 202 after clamping.

### Embodiment 2

It should be noted that the extension plate 201, the auxiliary plate 202, the first clamping notch 203, the second clamping notch 204, the limiting hole 205, the adjusting piece 206, and the labeling area 207 in embodiment 2 adopt the same description method and reference signs as embodiment 1. The only difference between embodiment 2 and embodiment 1 is that embodiment 2 does not include the first plate body 11 and the second plate body 12.

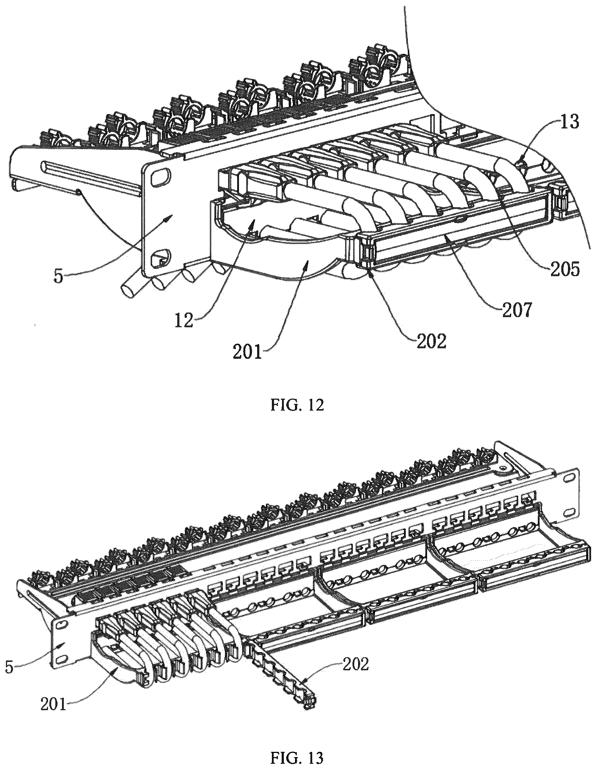

Referring to FIG. 6 to FIG. 12, the cable arrangement mechanism of the present invention further includes an extension plate 201 and an auxiliary plate 202 clamped with the extension plate 201. The extension plate 201 is roughly in an uncapped square shape, and the auxiliary plate 202 is clamped on a middle side edge of the extension plate 201. The middle side edge of the extension plate 201 and the auxiliary plate 202 are respectively provided with a first clamping notch 203 and a second clamping notch 204. In a case that the auxiliary plate 202 is clamped on the extension plate 201, the first clamping notch 203 and the second clamping notch 204 form a limiting hole 205 for the cable to pass through in a vertical direction, so that the cable passing through the limiting hole 205 can be fixed and limited by the extension plate 201 and the auxiliary plate 202,so that the two ends of the cable can be distributed on the extension plate 201 at a predetermined bending angle. The space occupied by the cable arrangement mechanism of the present invention is small and the fixing effect is good. Therefore, in a case that the cable arrangement mechanism of the present invention is provided on other mechanisms (such as distribution frames), the U-shaped structure of the cable can be fixed in combination with the distribution frame, thus avoiding the situation that each cable is twisted, and improving the fixing effect of the cable. In addition, the number of the limiting hole 205 formed in the extension plate 201 and the auxiliary plate 202 is at least one, and one limiting hole 205 is used for one cable to pass through.

In a case that the extension plate 201 and the auxiliary plate 202 are no longer clamped, the first clamping notch 203 and the second clamping notch 204 are in an open state. At this time, the cables located in the first clamping notch 203 can be adjusted to achieve fast cable arrangement.

In some embodiments, one end of the auxiliary plate 202 is rotatably installed on one end of the middle of the extension plate 201, and the other end of the auxiliary plate 202 is clamped on the other end of the middle of the extension plate 201. In a case that the first clamping notch 203 and the second clamping notch 204 need to be separated to adjust and install the cable, adopting such arrangement can improve the convenience of cable installation and adjustment, prevent the auxiliary plate 202 from being removed from the extension plate 201, and reduce the risk of losing the auxiliary plate 202. In other possible embodiments, two ends of the auxiliary plate 202 are clamped onto the extension plate 201. The method of clamping the auxiliary plate 202 onto the extension plate 201 maybe connection through clamping buckle and clamping groove. The specific clamping structure is not limited herein.

In some embodiments, an adjusting piece 206 is formed in the limiting hole 205. The adjusting piece 206 may be an elastic piece in an arc-shaped structure, a plate structure, or a triangular structure, so that in a case that the cable is located in the limiting hole 205, the adjusting piece 206 presses the outer surface of the cable against the inner wall of the limiting hole 205. In some embodiments, the number of the adjusting pieces 206 is two, and only one end of the adjusting piece 206 is in contact with the inner wall of the limiting hole 205 and has a certain elasticity, so that in a case that the cable comes into contact with the adjusting piece 206, the adjusting piece 206 can press the cable against the inner wall of the limiting hole 205, thus further improving the fixing effect of the cable. Alternatively, since there is an adjusting gap between the adjusting piece 206 and the limiting hole 205 and the adjusting piece 206 has a certain elasticity, after the cable is fixed by the limiting hole 205, the cable length or position can still be finely adjusted, thus reducing the number of times of opening the auxiliary plate 202 to adjust the cable, and improving the use effect of the cable.

In some embodiments, the adjusting piece 206 may be located in the first clamping notch 203 of the extension plate 201, or it may be located in the second clamping notch 204 of the auxiliary plate 202, or one adjusting piece 206 is located in the first clamping notch 203, and the other adjusting piece 206 is located in the second clamping notch 204, which is not specifically limited herein. In a case that the adjusting piece 206 is located in the first clamping notch 203, the adjusting piece 206 may be integrally formed with the extension plate 201. In a case that the adjusting piece 206 is located in the second clamping notch 204, the adjusting piece 206 may be integrally formed with the auxiliary plate 202.

In some embodiments, the length of the adjusting piece 206 in the limiting hole 205 along the axial direction of the limiting hole 205 (i.e., the depth of the limiting hole 205) is not limited. For example, it may be 1/2, 1/3, 1/4, 1/5 or the like of the depth of the limiting hole 205.

In some embodiments, the adjusting piece 206 is provided close to the opening position of the limiting hole 205 to facilitate the processing and forming of the adjusting piece 206.

Referring to FIG. 7, the cable arrangement mechanism of the present invention further includes a labeling area 207. The labeling area 207 is used for labeling hole numbers of the through holes 13 and the limiting holes 205 that correspond to each other one to one.

In some embodiments, the labeling area 207 is provided on one side surface of the auxiliary plate 202 away from the extension plate 201. In some embodiments, the labeling area 207 includes a transparent cover body that can be turned over. The cover body can be clamped with the auxiliary plate 202. A gap for placing labeling paper is formed between the cover body and the auxiliary plate 202 after clamping. In the present invention, the labeling area 207 is located on one side of the cable arrangement mechanism away from the frame body of the distribution frame, and is no longer provided on the distribution frame, but on the outer surface of the side closer to the user, thus facilitating the user to view the labeling.

### Embodiment 3

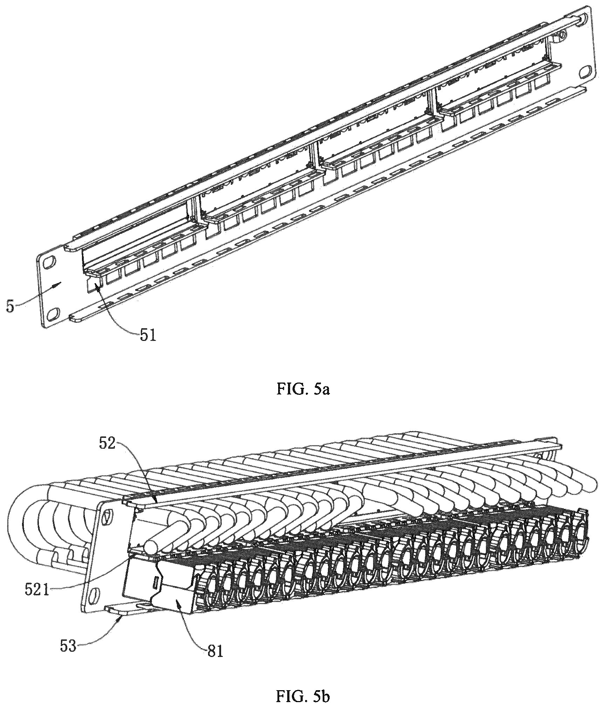

Referring to FIG. 5a, this embodiment provides a connecting plate for distribution, which includes a main plate body 5, a cable arranging mechanism according to embodiment 1 and a cable arrangement mechanism according to embodiment 2. The main plate body 5 is provided with at least one network interface 51 for a network cable to be inserted in. The height of the connecting plate is 1U-2U.

In some embodiments, the cable arranging mechanism is provided along a lower edge of the connecting plate, and the network interface 51 is provided close to an upper edge of the connecting plate (the side of the connecting plate provided with the network interface 51 in FIG. 5a is regarded as "upper"). The cable arranging mechanism is located below the network interface 51, and the through holes 13 of the cable arranging mechanism are provided underneath corresponding to the network interfaces 51 one to one. Therefore, it can make the cables arranged tidily and orderly, and facilitate the positioning of the cables.

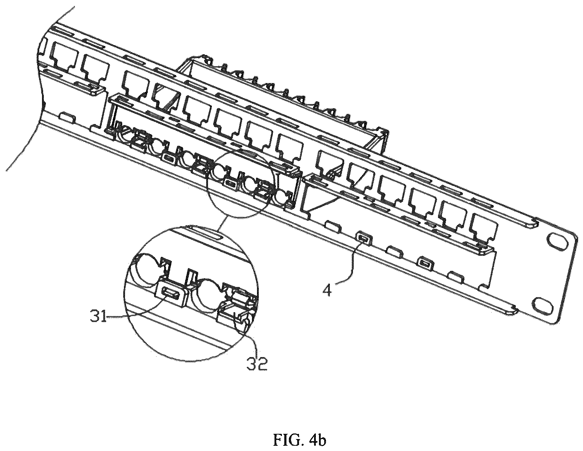

In some embodiments, the height of the connecting plate is 1U, and the height occupied by the cable arranging mechanism does not exceed 0.5U. During distribution, firstly the second plate body 12 is turned over from the first plate body 11 to open. At this time, the cable is passed through the opening 111 (refer to FIG. 4 which illustrates a schematic diagram when the second plate body 12 at the leftmost end is turned over from the first plate body 11). Then, the second plate body 12 is clamped with the first plate body 11 to achieve tidy arrangement of cables. The connecting plate for distribution of the present invention has both cable distribution and cable arranging functions, and the overall height is still maintained within the standard height (1U) of the existing cable arranging frame. Therefore, the volume is not additionally occupied due to the arrangement of the cable arranging mechanism, thus effectively saving the space in the network installation cabinet.

In other possible embodiments, the cable arranging mechanism may also be provided along the upper edge of the connecting plate, and the network interface 51 is provided close to the lower edge of the connecting plate.

In other possible embodiments, the height of the connecting plate may also be 2U, thus forming a standard size that is consistent with the height of the cable arranging frame and the distribution frame combined together in the existing technology, without changing the layout inside the existing distribution cabinet.

In other possible embodiments, the cable arrangement mechanism can replace the cable arranging mechanism.

In some embodiments, referring to FIG. 5b, the main plate body 5 is further provided with an elongation plate I 52 and an elongation plate II 53 extending a direction perpendicular to and away from the main plate body 5. A clamping position for clamping a network module 51 is formed between the elongation plate I 52 and the elongation plate II 53. Correspondingly, a clamping position 521 may also be provided on the elongation plate I 152 and the elongation plate II 53. Correspondingly, the network module 81is provided with a structure that can be fit with the clamping position 521, thus facilitating the connection of the network adapter module in the form of network module 81.

In other possible embodiments, referring to FIG. 5c, the network adapter module of a PCB circuit board 82 may also be used to replace the network module 81. The PCB circuit board 82 can be provided on a bracket 54 and the bracket 54 is connected with the main plate body 5. The PCB circuit board 82 may also be directly clamped onto the main plate body 5 through a connector 821. In some embodiments, the connector 821 as a whole is in a long strip shape. Each PCB circuit board 82 may be provided corresponding to multiple network interfaces 51.

### Embodiment 4

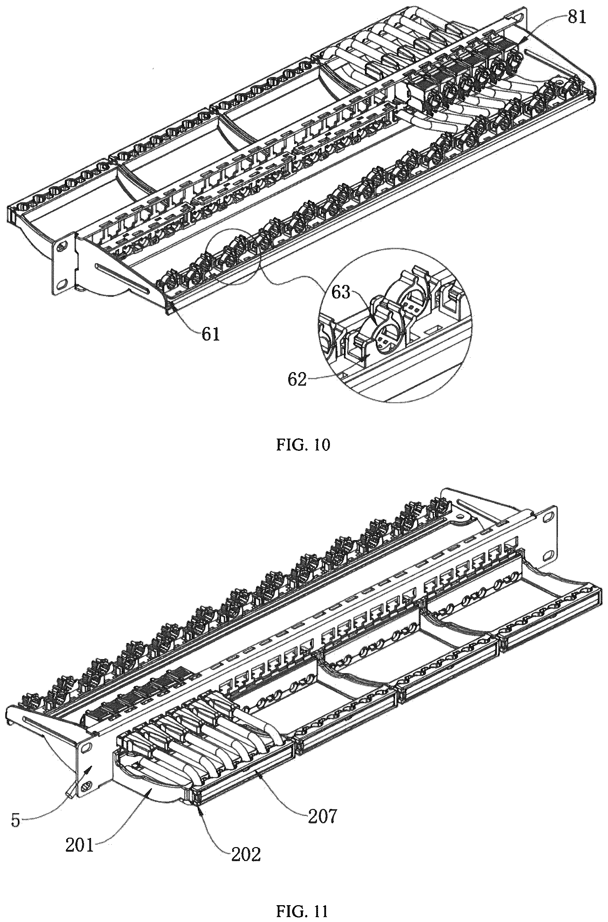

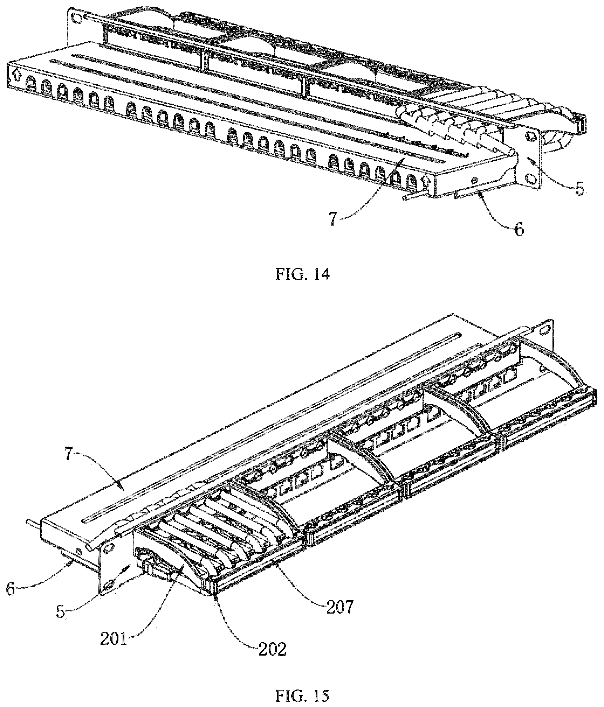

Referring to FIG. 10 to FIG. 15, this embodiment provides a distribution frame, which includes a connecting plate for distribution according to embodiment 3, and a frame body 6 connected with the connecting plate. The frame body 6 may be of an integral or split type. In a case that the frame body 6 is of an integral type, the overall installation convenience can be improved.

In some embodiments, in the distribution frame of the present invention, the frame body 6 is further provided with a cable supporting rack 61. The cable supporting rack 61 is provided with a cable clamping seat 62 corresponding to each network interface 51. The cable clamping seat 62 is provided a tying buckle 63. Therefore, the cables on the cable supporting rack 61 can be arranged and fixed.

In some embodiments, in a case that the side of the frame body 6 away from the extension plate 201 is not covered by the cover body 7, the frame body 6 is in a frame structure; Through such arrangement, the extension plate 201 integrally formed with the first plate body 11 can be conveniently installed in a forward or reverse direction on the connecting plate, thus meeting the requirement that the cables (jumpers) are placed in different directions.

In some embodiments, in a case that the side of the frame body 6 away from the extension plate 201 is covered by the cover body 7, the frame body 6 is in a plate structure. When the cover body 7 is closed, the cable arranging mechanism is not provided inside a box body formed by the cover body 7 and the frame body 6. Therefore, the network modules are all located inside the chamber, and only the cables connected with the network interface are located outside the box, resulting in a higher overall attractiveness. A network module 81 as illustrated in FIG. 10 or a PCB circuit board 82 as illustrated in FIG. 5c may be provided inside the box body formed by the cover body 7 and the frame body 6, so as to achieve the connection with the cables. The PCB circuit board 82 is provided with an electrical plug core located inside the network interface 51. The PCB circuit board 82 is further provided with a terminal block, into which a cable cutter is inserted. A cable limiting post is provided above the terminal block. A top of the cable cutter extends into the cable limiting post to cut the cable inside the cable limiting post to contact with a conductor inside the cable to achieve data transmission.

Therefore, the distribution frame of the present invention is added with a cable arranging function while maintaining the original 1U height of the distribution frame, that is, there is no need to provide a separate cable arranging frame, so that the space inside the network installation cabinet is greatly saved, and the distribution frame can meet the functions of both arrangement and distribution without increasing its volume or height.

Taking a 48-port switch as an example, in a case that the distribution frame is a 24-port distribution frame, two distribution frames need to be provided, and correspondingly one cable arranging frame is provided for each distribution frame. Usually, the height of the cable arranging frame is also 1U, that is, the required height other than the switch is 4U. However, by using the distribution frame of the present invention, in a case that 48 cables are connected, the occupied height in the cabinet can be reduced by 2U, and the space inside the cabinet is approximately reduced by 30-40%.

The above embodiments are only intended to describe the technical concept and characteristics of the present invention, and their purpose is to enable those skilled in the art to understand the content of the present invention and implement it, rather than limit the scope of protection of the present invention. Any equivalent changes or modifications made according to the essence of the present invention should be covered within the scope of protection of the present invention.

## Claims

1. A cable arranging mechanism, comprising:
a first plate body, the first plate body being provided with an opening for a joint of a cable to pass through; and
a second plate body, at least partial area of the second plate body being capable of being clamped with the first plate body, in a case that the second plate body and the first plate body are clamped with each other, the opening for the joint of the cable to pass through being closed and at least one through hole for the cable to pass through being formed, and in a case that the second plate body and the first plate body are not clamped with each other, the opening for the joint of the cable to pass through being in an open state.

2. The cable arranging mechanism according to claim 1, wherein the second plate body is provided with at least one first clamping head capable of being clamped with the first plate body, and the first clamping head is provided with a second clamping groove capable of being clamped with the first plate body.

3. The cable arranging mechanism according to claim 2, wherein one side of the first clamping head away from the second plate body is provided with an adjusting groove, and the first clamping head is capable of moving in the adjusting groove towards a direction of getting close to or away from the first plate body.

4. The cable arranging mechanism according to claim 1, wherein at least one of the first plate body and the second plate body is further provided with a clamping part for connecting with a third mechanism.

5. The cable arranging mechanism according to claim 4, wherein the clamping part comprises:
at least one second clamping protrusion, the third mechanism being provided with a third clamping groove fit with the second clamping protrusion; and
at least one clamping buckle, the clamping buckle being used for clamping with a partial area of the third mechanism.

6. The cable arranging mechanism according to any one of claims 1-5, wherein the cable arranging mechanism further comprises an extension plate connected with at least one of the first plate body and the second plate body and an auxiliary plate clamped with the extension plate, the extension plate and the auxiliary plate are respectively provided with at least one group of first clamping notch and second clamping notch which correspond to each other, so that in a case that the extension plate and the auxiliary plate are clamped with each other, the first clamping notch and the second clamping notch form a limiting hole for the cable to pass through; or in a case that the extension plate and the auxiliary plate are not clamped with each other, the first clamping notch and the second clamping notch are opened.

7. The cable arranging mechanism according to claim 6, wherein at least one adjusting piece is provided in the limiting hole, an adjusting gap is formed between the adjusting piece and an inner sidewall of the limiting hole, and the adjusting piece is located on one side of the limiting hole close to the extension plate or the auxiliary plate.

8. The cable arranging mechanism according to claim 6, wherein the extension plate and the first plate body are integrally formed; or the extension plate and the first plate body are assembled from a split type.

9. The cable arranging mechanism according to claim 8, wherein the extension plate extends towards a direction of getting away from the first plate body on one side of the first plate body to form an extension area.

10. The cable arranging mechanism according to any one of claims 6 and 7-9, wherein the cable arranging mechanism further comprises a labeling area, the labeling area is used for labeling the hole number of the through hole or the limiting hole, and the labeling area is provided on one side surface of the auxiliary plate away from the extension plate.

11. A cable arrangement mechanism, comprising an extension plate and an auxiliary plate capable of being clamped with the extension plate, the extension plate and the auxiliary plate being respectively provided with at least one group of first clamping notch and second clamping notch which correspond to each other, so that in a case that the extension plate and the auxiliary plate are clamped with each other, the first clamping notch and the second clamping notch form a limiting hole for a cable to pass through; or in a case that the extension plate and the auxiliary plate are not clamped with each other, the first clamping notch and the second clamping notch are opened.

12. The cable arrangement mechanism according to claim 11, wherein at least one adjusting piece is provided in the limiting hole, an adjusting gap is formed between the adjusting piece and an inner sidewall of the limiting hole, and the adjusting piece is located on one side of the limiting hole close to the extension plate or the auxiliary plate.

13. The cable arrangement mechanism according to any one of claims 11-12, wherein the cable arrangement mechanism further comprises a labeling area, the labeling area is used for labeling the hole number of the limiting hole, and the labeling area is provided on one side surface of the auxiliary plate away from the extension plate.

14. A connecting plate for distribution, comprising a main plate body, the cable arranging mechanism according to any one of claims 1-10 and the cable arrangement mechanism according to any one of claims 11-13, the main plate body being provided with at least one network interface for a network cable to be inserted in, the height of the connecting plate being 1U-2U.

15. The connecting plate for distribution according to claim 14, the height of the connecting plate is 1U, and the height occupied by the cable arranging mechanism does not exceed 0.5U.

16. A distribution frame, comprising the connecting plate for distribution according to claim 14 or 15, and a frame body connected with the connecting plate.

17. The distribution frame according to claim 16, wherein the distribution frame further comprises a cover body detachably connected with the frame body, and at least part of the cable is capable of being accommodated in a chamber formed by the cover body and the frame body.
